# EUROPEAN PATENT SPECIFICATION

(11) **EP 0 323 457 B1**
(45) Date of publication and mention of the grant of the patent: **02.02.1994**
(21) Application number: 87904460.0
(22) Date of filing: 26.06.1987
(51) Int. Cl.: H04N 7/18

(54) **MOTION DETECTOR APPARATUS FOR RESPONDING TO EDGE INFORMATION CONTAINED IN A TELEVISION SIGNAL**
AUF IN EINEM FERNSEHSIGNAL ENTHALTENE KANTENINFORMATION ANSPRECHENDE BEWEGUNGSERKENNUNGSVORRICHTUNG
APPAREIL DETECTEUR DE MOUVEMENTS SENSIBLE AUX INFORMATIONS PORTANT SUR LES BORDS D'OBJETS CONTENUES DANS DES SIGNAUX DE TELEVISION

(30) Priority: 15.07.1986 GB 8617177; 15.07.1986 GB 8617178
(43) Date of publication of application: 12.07.1989
(73) Proprietor: BURLE TECHNOLOGIES, INC., Wilmington, DE 19801 (US)
(72) Inventor: ASCHWANDEN, Felix, CH-8800 Thalwil (CH); BART, Theodor, Ernst, CH-8963 Kindhausen (CH)
(74) Representative: von Füner, Alexander, Dr.
(86) International application number: US8701485
(87) International publication number: WO8800784

(56) References cited:
- US-A- 3 718 864
- US-A- 3 916 328
- US-A- 4 068 138
- US-A- 4 157 509
- US-A- 4 160 998
- US-A- 4 270 143
- US-A- 4 546 383
- US-A- 4 597 010
- US-A- 4 644 188

## Description

This invention relates to motion detection in a television picture that is contained in a television signal and more particularly to a motion detector which employs information included in the television signal and indicative of the edges of objects appearing in a televised scene. The invention further relates to a method of detecting motion.

The prior art is aware of the fact that a television signal contains information that is relative to the motion in the television picture content. Such techniques have been used in intrusion detection or video surveillance systems where it required to detect motion by examination of a video signal. A known method employed in the prior art compares a real time image with a delayed image from a previous field or frame which is stored in a memory.

In any event, such systems require a relatively expensive frame store memory which stores the video signal of an entire field or frame. The video signal that contains the picture information of the subsequent picture frame is compared with the stored video signal and the result of such comparison provides a signal indicative of motion. These systems operate on the fact that motion causes the content of pixels in a present video signal to be different from the corresponding pixels in the stored frame.

In any event, as one can imagine these systems have difficulties in that an expensive frame store is required. A further difficulty with such systems is that they are affected by changes in illumination which can cause false alarms.

Another prior art system employs the use of one or more windows of fixed and variable size which are placed somewhere in the television picture area to be observed. The average light level within the windows is then measured and stored in the memory. A short time later a second measurement is made and compared to the first one. If a person moved in the window between these times the first and second measurements become unequal and an alarm is triggered. These systems do not require full frame storage but require substantial processing to define the window areas which may constitute many lines of a television picture. Again, these systems work satisfactorily under constant illumination conditions but they react to light changes thereby causing false alarms. It is also known that motion information is contained in the frequency spectrum of a television signal, cf. for example US-A-4,641,186.

These systems make use of the fact that the frequency spectrum of a television signal for a stationary picture consist of a series of components and harmonics of the horizontal and vertical scanning frequencies. In any event, the components of major magnitudes of the television signal spectrum are the DC component, the field frequency components and the components of the line frequency and its harmonics. Thus, surrounding each line frequency harmonic is a cluster of components each separated from the next by an interval equal to the field scanning frequeny.

For a stationary picture the harmonics for example of the line frequency are fixed and are at integral multiples of the line frequency. However, when motion is present the spectral components contain additional sidebands due to the change of information from one field to the next. Essentially, these additional sidebands can be detected to provide a signal indicative of motion. Other systems which are more sophisticated use digitized video signals and require digital processing in computers for picture recognition. The tremendous data rate provided by a television camera must first be reduced before it can be handled by the computer.

This adds cost and complexity to the systems. These systems are very flexible but a great deal of effort is needed to provide the proper software in order to provide digital processing as well as complicated and sophisticated digital compression techniques. Hence, these systems are extremely expensive.

In view of the above, it should also be apparent to those skilled in the art that there are many additional applications apart from surveillance where it is required to be able to detect motion by examination of a video signal. In any event, it is indicated that the apparatus employed with any such detection scheme should be economical, easy to implement and be reliable.

In this manner the television signal can be adequately employed to detect motion and hence used in conjunction with an intrusion detection system or other system to indicate the presence of such motion.

US-A-4,546,383 describes a method for reducing the data required to transmit a representation of a picture, essentially by extracting and storing full outline contours of the objects in the picture, and then transmitting only the contour information, and further only the information representing new position of contours when the picture content moves.

According to US-A-4,160,998 one implementation simply uses the number of edges in a television line determined by an edge discriminator to calculate a single statistic, which is monitored to indicate potential changes in the picture content.

One object of the present invention is to provide a motion detector that employs edge information contained in the television signal to produce an output indicative of such motion. A further object of the present invention is to provide a motion detector which employs simple and economical circuitry capable of responding to the edges of an object and to determine when an object has moved by observing whether or not an edge of an object moves. The system should generate an edge outline of an object and stores the same and then compares the next outline with the stored outline to determine motion.

It is a further object of the present invention to provide an inexpensive and reliable motion detector by extracting motion information indicative of object edges located in a picture and comparing this information as stored with information in a succeeding field or frame to determine whether or not the edge or object pattern has changed due to the presence of motion.

According to the present invention these objects are solved by the apparatus and method, respectively, as described in claims 1 and 11.

Preferred embodiments and further developments of the invention are described in claims 2 to 10 and 12 to 15, respectively.

Fig.1 is a detailed block diagram showing a motion detector for responding to edge information according to this invention and further includes a series of timing diagrams depicting the various outputs of the circuitry shown in Fig. 1.

Fig. 2 shows waveforms illustrating a typical write/read compare sequence for the circuitry shown in Fig. 1.

Fig. 3 shows a series of timing diagrams depicting the various outputs concerned with processing the video signal to determine a zero cross over.

Fig. 4 again shows a signal as provided by the circuit of Fig. 1 to determine edge information based on the zero crossing time.

Fig. 5 shows a complete circuit schematic of an amplitude independent zero crossing detector as can be employed with this invention.

Fig. 6 shows a series of waveforms depicting the operation of the zero crossing detector of Fig. 5.

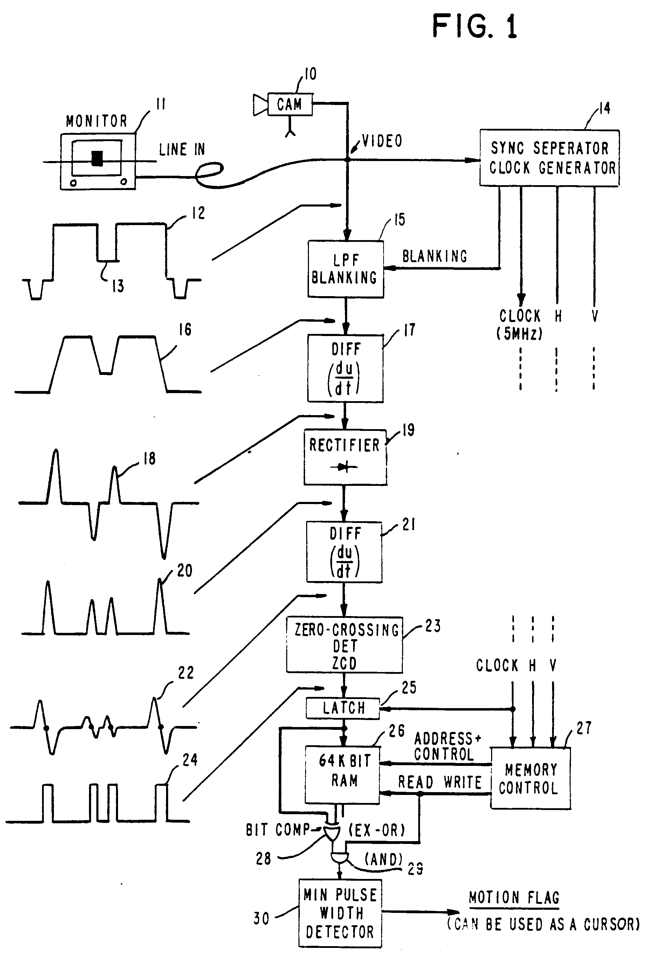

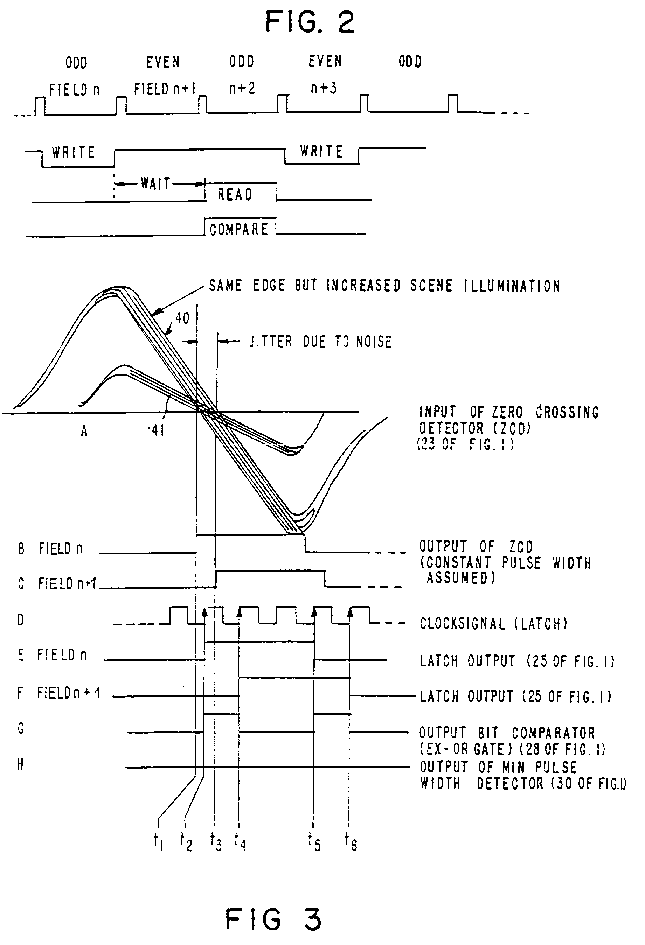

Referring to Fig. 1, there is shown a detailed block diagram of a motion detector apparatus according to this invention.

In regard to Fig. 1 there are a series of waveforms depicted on the left each of which is directed towards the output of particular modules designated in Fig. 1. These waveforms are indicative of the video or television signal as processed by the circuitry shown in Fig. 1 to produce motion detection by responding to edges of an object in a televised scene.

Referring to Fig. 1, there is shown a television camera 10. The output of the television camera 10 produces a typical video signal 12. For purposes of explanation a portrayal of the area scanned by the television camera 10 is shown in regard to the screen presentation of a typical television monitor or receiver 11. As one can ascertain, for purposes of explanation, the television camera 10 is surveilling an area which provides a simple scene comprising a white field with a grey square in its center. In this manner the line n as indicated in regard to the monitor 11 is selected to explain the function of the system.

As one can ascertain, the television signal output 12 provides the television picture as shown on monitor 11. The signal 12 essentially defines the white field with a central area 13 manifesting the grey square. The signal 12 is indicated in the diagram to the left of the block diagram to specify the output of the television camera 10. The video signal 12 is coupled to a module 14 designated as sync separator and clock generator. Essentially, the function of the module 14 also provides well known operations. As one can ascertain, the television signal contains both a vertical and horizontal signal which are combined within the television signal. The vertical and horizontal signals are typically extracted from the television signal by means of conventional sync separator circuits.

Essentially, as indicated, one output from the sync separator 14 is the horizontal sync signal designated by the letter H while another output from the sync separator is the vertical sync signal designated by the letter V. The sync separator also operates as a clock generator and thereby produces a clock output at a frequency of approximately 5 MHz. This signal of approximately 5 MHz is a line locked clock frequency, and as will be explained, the clock frequency is used to drive the memory and should have a reasonable short term stability but not be crystal controlled. The value of approximately 5 MHz corresponds to 256 samples per active television line as will be further explained. The means of generating such a frequency are well known within the state of the art. In this manner as indicated above, for the NTSC system the horizontal scanning frequency is approximately 15,725 Hz. One can utilize conventional frequency multiplication techniques or utilize a phase locked loop to produce a signal which is close to 5 MHz. For example, by multiplying the horizontal line frequency by a factor of 318 or there abouts one could obtain a frequency which is close to 5 MHz and which is locked by means of a phase locked loop or other device to the line frequency. There are other techniques such as the use of frequency synthesizers and so on which will enable one to generate such a clock frequency with simple available circuitry. Hence, it should be clear to those skilled in the art that an output clock frequency derived from information contained in the video signal 12 is immediately available and can be easily generated.

The video signal 12 emanating from camera 10 is also applied to a lowpass filter and blanking circuit 15. As is also well known in the art, the sync separator 14 produces signals indicative of blanking. In this manner the sync signals are removed from the television signal and the video is applied to the lowpass filter 15. The output of the lowpass filter 15 is designated as waveform 16. The lowpass filter 15 is a conventional device and is required so that the Nyquist criterion which essentially corresponds to the 5 MHz sampling frequency is maintained. The lowpass filter can be further designed so that very fine details which may exist in the television signal concerning very small objects such as insects, raindrops and so on are completely suppressed.

As one can ascertain by comparing the signal 12 with the signal 16, the signal 16 has slower rise time and fall times associated with the edges indicative of the white field with the grey square in the center. The output of the lowpass filter 15 is applied to the input of a differentiator 17. The function of the differentiator 17 is to define the edges of the lowpassed video signal as shown by waveform 18. The output of the differentiator 17 is applied to the input of a rectifier circuit 19. The purpose of the rectifier 19 is to convert all negative going edges into a positive pulse signal. The rectifier is a conventional circuit and may be a full-wave rectifier which is well known in the art.

The output of the rectifier 19 is applied to the input of a second differentiator 21 whereby the second differentiator 21 provides a pulse signal indicative of the zero crossings of the pulse edges as shown in waveform 22. The darker dots associated with the waveform 22 indicate zero crossings. The output of the differentiator 21 is applied to the input of a zero crossing detector (ZCD) 23. The function of the zero crossing detector 23 is to detect the zero crossings of the signal 22. Zero crossing detectors as 23 are also known in the art. In any event, a particular example of a suitable zero crossing detector 23 will be given subsequently.

The output of the zero crossing detector is applied to the input of a latch 25. The latch 25 receives the 5 MHz clock from the sync separator and clock generator 14 and hence synchronizes the zero crossing outputs with the 5 MHz clock. The output of the latch 25 is applied to the input of a 64 kbit memory or RAM 26. The 64 kbit memory is selected to accommodate 256 lines and 256 samples per line. Hence, the memory 26 is able to store the edges of all possible locations of a television field.

As seen in Fig. 1, the memory 26 is controlled by a memory control circuit 27. Essentially, the memory control circuit 27 receives the 5 MHz clock and the horizontal and the vertical sync signals. As one can ascertain, the memory control may include a line counter whereby each line in a television field is counted by responding to the horizontal sync pulse. The television fields are also counted by means of a field counter which is responsive to the vertical sync pulse. Counters which operate and are synchronized by horizontal and vertical sync signals are well known in the art and are used widely in digital circuits for converting a television field or frame to pixels. Hence, each line in a particular field is represented by 256 separate storage locations in memory 26. In any event, the memory control 27 produces a series of addresses for each line and at each address a particular pulse as shown in waveform 24 is stored at a binary 1 or 0 indicative of a crossover. Each stored pulse represents an edge of a viewed object. The memory control also produces as will be explained a synchronous read and write signal to enable the latched zero crossings to be applied at the appropriate address in the memory.

Referring to Fig. 2, there is shown a typical write-read/compare sequence. As seen in Fig. 2, the edges of field n are stored (written into memory) and read out and compared to the new values during the field n+2 by means of the exclusive OR gate 28. The OR gate 28 functions as a bit comparator and compares the value stored in memory with the value for a successive field as field n+2. The AND gate 29 which is connected to the exclusive OR gate 28 enables the output only during the read/compare time. It is noted that the typical sequence shown in Fig. 2 can be modified. The wait time can be expanded to 3, 5, 7...fields respectively if very slowly moving objects are to be detected. The output of the AND gate 29 is applied to a minimum pulse width detector 30. The output of this detector 30 is designated as motion flag and essentially can also be used as a cursor. The reason why the output of the minimum pulse width detector 30 can be used as a cursor is that one has information regarding the exact position of each edge as stored. Each edge as indicated above has a unique address in regard to a television line and in regard to 1 out of 256 positions on the line.

Hence when the minimum pulse width detector 30 provides an output, the circuit via the address can indicate where that position is in regard to the television picture. Hence, the output of the minimum pulse width detector can be used as a cursor to provide increased illumination on the display indicating the exact area where motion occurred or can be used in conjunction with the address to print out or otherwise display the particular area on the television screen where motion has occurred.

Referring to Fig. 3, some of the characteristics of the zero cross-over detector will be explained and described. As indicated, the zero cross-over detector 23 operates to detect the zero crossings of the signal 22 as applied to its input.

Shown in Fig. 3a are two waveforms 40 and 41 which essentially represent the same edge but at different values of illumination. As one can see from Fig. 3A, the zero crossing points at the input of the zero crossing detector do not change position in time should the level of the video signal vary due to illumination changes. In any event, the signals 40 and 41 represent the exact zero cross-over but at different illuminations. The signal 40 is of an increased scene illumination as compared to the signal 41.

Due to noise in the video signal the input signal of the zero crossing detector 23 is slightly irregular resulting in a possible jitter of one clock cycle of the two pulses to be compared in the external OR gate 28. The jitter is shown in Fig. 3A. Assume that there is no motion and the input signal of the zero crossing detector 23 crosses zero at time T1 in field n. The output of the zero crossing detector is then latched at time T2 and stored in the memory. As one can see, Fig. 3B represents field n while Fig. 3C represents field n+1. Figure 3D shows the 5 MHz clock signal in regard to the field signals while Fig. 3E shows the latch output for field n and Fig. 3F shows the latch output for field n+1. Figure 3G shows the output of the exclusive OR gate 28 which is the bit comparator as it serves to compare the stored value of field n with that of field n+1. Figure 3H shows the output of the minimum pulse width detector.

In any event, the operation due to jitter is as follows. As indicated, if one assumes no motion and one further assumes that the input signal of the zero crossing detector crosses zero time T1 in field n, the output of the zero crossing detector is then latched at time T2 and stored in memory. Two fields later in the read/comparison sequence, the input of the zero crossing detector may cross zero at time T3 due to noise or jitter. As a result, the output of the zero crossing detector is latched at time T4 and the exclusive OR gate as gate 28 yields two pulses each one clock cycle wide thereby indicating motion. This of course would be a false output.

In any event, as one can see from Fig. 3G, these two pulses can be discriminated against by adding a minimum pulse width detector circuit as circuit 30 shown in Fig. 1. This circuit only yields a signal if its input signal has a minimum width of two clock cycles thereby avoiding false alarms due to noise. As one can immediately understand based on the waveforms shown in Fig. 3G, the minimum pulse width detector can comprise one shots and AND gates or some other conventional circuit arrangement.

As one can ascertain from Fig. 3G, the pulse width detector will only produce a pulse output if there is a continuous high level. As one can ascertain from Fig. 3G such a level does not exist between T₅ and T ₄. The absence of a pulse in this duration can be easily detected.

In any event, as one can ascertain from Fig. 3G, if there was a substantial change in the edge signal between field n and field n+1 then the overlap would be substantial and a longer width pulse would be provided. It is of course understood that there are many other techniques for providing an output signal based on a minimum width of a pulse to thereby avoid false alarms due to noise.

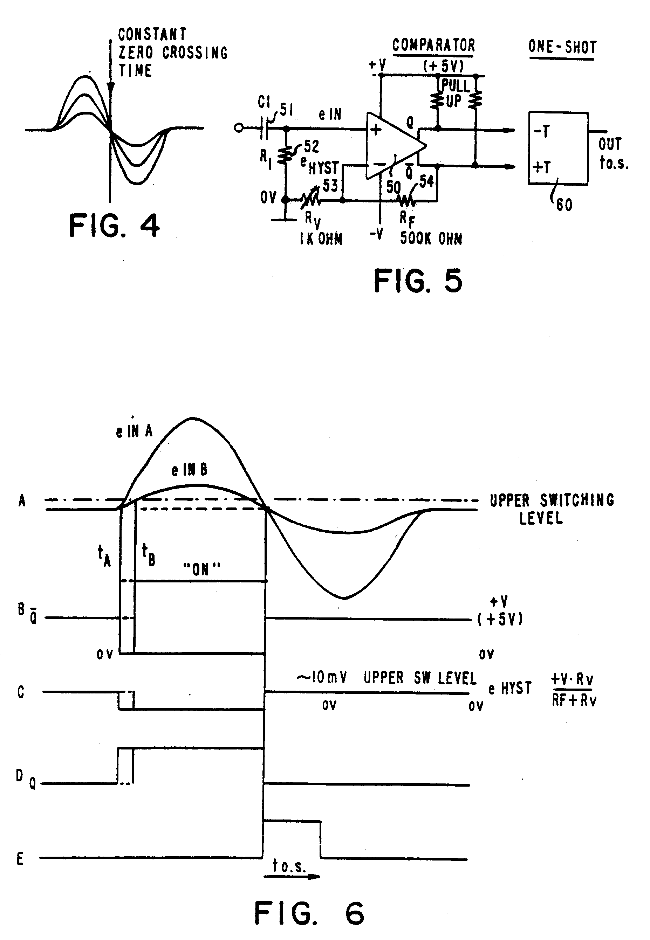

As indicated from the above, one can ascertain that the zero crossing detector as for example detector 23 shown in Fig. 1, should preferably operate to have a jitter free determination of the zero crossing of a waveform. As one can ascertain from Fig. 4, there is shown the input signal to the zero crossing detector 23 as for example that signal 22 as shown in Fig. 1. In any event, as was explained above, if scene illumination changes, the amplitude of the signal changes but the cross over in regard to the axis does not change.

As again shown in Fig. 1, the signal applied to the input of the zero crossing detector is prepared by utilizing a lowpass filter, double differentiation and full wave rectification to give the waveform shown in Fig. 4 which is analogous to the waveform shown in Fig. 1 as waveform 22. It is noted that the rectifier shown in Fig. 1 is not an essential feature but is a convenient means for providing a constant polarity waveform for the second differentiator 21 and the zero crossing detector 23. In any event, a suitable zero crossing detector is shown in detail in Fig. 5. As indicated the characteristic of the waveforn shown in Fig. 4 is that the center point or zero crossing does not move on the time axis as the amplitude of the signal changes due to scene illumination.

Zero crossing time is detected using the circuit shown in Fig. 5. A comparator 50 which may be a conventional type comparator such as the LM360 has an input which is AC coupled to the signal emanating from the output of the differentiator 21 via capacitor 51 designated as C₁. One output of the comparator which is designated as Q is coupled back to the inverting input through a feedback resistor 54. This feedback provides a small amount of hysterisis such that the comparator will only trigger when the leading edge of the input waveform exceeds a value preset with the variable resistor 53. In practice an offset of 10 millivolts was shown to give good immunity against false triggering on noise without losing sensitivity. This first upper switching level will have timing variations in response to the amplitude of the signal. See Fig. 6A.

It is noted that the comparator 50 is on whereby the Q̅ output will be at near zero volts and the offset bias will also be zero. The comparator 50 will thus trigger off when the input signal changes polarity or essentially at the zero crossing point. Measurements on the circuit depicted in Fig. 5 shows that the timing error at the zero crossing was less than 20 ns with a signal level change of 6 to 1. This means that the requirements for the motion detector with a large safety margin are completely met. The Q or Q̅ output of the comparator is used to trigger a one shot 60 that provides the desired jitter free outline signal (Fig. 6E).

Again referring to Fig. 6, Fig. 6A shows two signals A and B either of which can be applied to the input of the comparator via capacitor 51. Signal A represents edge information of a scene having a greater illumination than Signal B. It is noted that both signals essentially provide the same zero cross over. Figure 6B shows the Q̅ output from the comparator based on an upper switching level as shown. The comparator output signal produces a positive transition exactly at the zero cross over.

Figure 6C shows the waveform at the input to the inverting terminal (eHYST) of the comparator while Fig. 6D shows the Q output of the comparator. It is noted that either of the trailing edges of waveforms B and D can be used to trigger the one shot 60 to produce the output signal TOS which is of a constant duration and a selected pulse width. It is noted that this comparator provides a jitter free determination of the zero crossing of the applied waveform.

Based on the above, it should be apparent to those skilled in the art that the circuitry and techniques described offer many advantages. Essentially, while the structure requires the use of a memory, it is immediately understood that the memory only has to store one bit indicative of the existence or presence of edges of objects along the television line. This completely eliminates the need for processing a television picture into pixels using analog-to-digital conversion and digital-to-analog conversion.

The storage capability of the memory is greatly reduced as compared to prior systems. In any event, the number of edges that can be achieved and stored by this system is more than sufficient to determine the outline of all objects under surveillance and to further determine whether or not an outline has shifted or whether or not an object in the televised scene has moved. Hence, the output of the circuit, namely the motion flag can be utilized to trigger another surveillance device as for example an additional video camera or couple the present camera to a video tape recorder or other storage device. In this manner the motion flag can trigger a tape recorder to provide storage of the television picture when a motion condition is detected. It is, of course, understood that the circuitry as above-described is extremely simple as compared to other circuitry employed in surveillance systems.

It is also understood that while the above-noted example indicated storage of edges for a complete television field, one can store edges for particular sets of lines or particular sets of portions of line as windows and so on which windows are then monitored by means of storing edges as described above for each particular area of a television picture under observation. In this manner one can substantially reduce the storage requirements of the system.

In any event, as one can see and ascertain from the above, it is immediately understood that the components such as memory 26 of Fig. 1 are available from many commercial entities and is relatively inexpensive.

## Claims

1. A motion detector apparatus of the type responsive to a television signal indicative of a television picture with said signal generated by a television camera monitoring an objects containing area under surveillance, comprising:
means responsive to said television signal to store the edge information indicative of given object location during a first timing interval,
and operative to generate edge information for a successive timing interval and including comparator means (28, 29, 30) to compare said stored edge information with said generated edge information at said given object locations to provide an output signal representative of a change in said edge information between said intervals and indicative of motion in said area under surveillance, characterized in that said means responsive to said television signal includes,
a low pass filter means (15) having an input for receiving said television signal to provide at an output a low passed television signal indicative of a given sampling rate,
a first differentiator (17) coupled to said lowpass filter output for providing a differentiated signal manifesting a series of bipolar pulses indicative of edge information,
rectifier means (19) coupled to said first differentiator for providing a pulse train of a given polarity indicative of said edge information in said differentiated signal,
a second differentiator (21) coupled to said rectifier means for providing a second differentiated signal with specified zero cross over indicative of edge information in said rectified signal,
a zero crossing detector (23) responsive to said second differentiated signal to provide a first binary value for a zero cross over and a second binary value for the absence of a cross over,
a memory (26) coupled to said detector and operative to store said first binary values in given locations indicative of edge information in said television signal during said first timing interval.

2. The motion detector apparatus according to claim 1, wherein said first timing interval is a television field and said successive timing interval is a successive comparable field.

3. The motion detector apparatus according to claim 1, wherein said memory (26) has a plurality of storage locations each location operative to store edge information indicative of an associated television line and a sampled area within said line to thereby store in each associated location edge information of each line as sampled during said first timing interval.

4. The motion detector apparatus according to claim 3, wherein said memory (26) is a RAM memory having said plurality of storage locations for storing 256 samples for each of 256 television lines.

5. The motion detector according to claim 1, further comprising:
memory control means (27) coupled to said memory (26) for providing address information for said memory (26) indicative of a selected number of horizontal lines in a television picture to enable said memory to store in the associated memory locations all edge information associated with said addressed line, whereby said memory (26) has stored therein edge information for each selected number of lines within a plurality of locations associated with each line.

6. The motion detector apparatus according to any of the preceding claims, further including:
sync separator means (14) responsive to said television signal to provide at one output a horizontal sync signal, at a second output a vertical sync signal and at a third output a clock signal having a repetition rate indicative of a sampling rate for each television line.

7. The motion detector apparatus according to claim 6, wherein said
memory control means (27) have inputs coupled to said sync separator means (14) outputs and outputs coupled to said memory means (26) and responsive to said horizontal sync, vertical sync and said clock signal to provide at a first output a series of addresses each indicative of a television line and a sampling interval on said line for addressing said memory to enable storage of said information in selected memory locations and further including means for controlling said memory means to read or write said stored information.

8. The motion detector according to claim 7, further including latching means (25) having one input coupled to the output of said zero crossing detector means and one input coupled to said clock output of said sync separator means (14) and operative to provide at an output said series of pulses indicative of zero crossing information synchronized to said clock.

9. The motion detector apparatus according to claim 8, wherein said comparator means includes a bit comparator gate (28) having one input responsive to a stored value and another input responsive to said generated value to provide at an output a signal indicative of an edge comparison for no motion or a signal indicative of a non-edge comparison for motion.

10. The motion detector apparatus according to claim 9, further including a minimum pulse width detector means (30) included in said comparator means and operative to provide said alarm signals only for predetermined width output signals from said comparator means.

11. A method of detecting motion by responding to a television signal generated by a television camera monitoring an objects containing area under surveillance, comprising the steps of:
storing in memory a plurality of samples for each of a given number of television lines with each sample stored indicative of object edge information for each television line during a first television timing interval,
generating a second plurality of samples for each given number of television lines during a second successive television timing interval with each sample generated indicative of the same edge information as stored,
comparing said stored samples with said generated samples to determine whether a movement of an edge has occurred between said intervals,
providing an output signal upon determination of a movement of an edge and indicative of motion in said area, characterized in that the step of generating said second plurality of samples includes differentiating said television signal to provide a differentiated output signal,
rectifying said differentiated signal to provide a pulse signal of a given polarity with each pulse indicative of edge information along a television line,
differentiating said pulse signal to provide a differentiated signal having distinct zero crossings,
detecting said zero crossing to provide a signal having a first binary value for a zero crossing and a second value for the absence of a crossing.

12. The method according to claim 11, wherein said first television timing interval is a television field with said second successive timing interval being one of a following comparable field.

13. The method according to claim 12, wherein each television line is sampled a given number of times to provide a plurality of sampled areas for each line, with each area capable of providing edge information to be stored.

14. The method according to claim 11, further including the step of identifying each stored sample as stored in memory according to a given television line indication and to a given area on said line whereby each sample stored can be identified accordingly.

15. The method according to claim 14, further including the step of identifying given samples stored which indicate a movement of an edge when said output signal is provided to enable one to locate the area of movement in said television picture.

## Patentansprüche

1. Bewegungsdetektor, der auf ein ein Fernsehbild darstellendes Fersehsignal anspricht, das von einer einen Gegenstände enthaltenden überwachten Bereich beobachtenden Fernsehkamera erzeugt wird, mit
einer auf das Fernsehsignal ansprechenden Einrichtung zum Speichern der einen gegebenen Gegenstandsort anzeigenden Kanteninformation während eines ersten Zeitintervalls,
und die eine Kanteninformation für ein nachfolgendes Zeitintervall erzeugt und eine Komparatoreinrichtung (28, 29, 30) enthält, die die gespeicherte Kanteninformation mit der erzeugten Kanteninformation an den gegebenen Gegenstandsorten vergleicht und ein Ausgangssignal bereitstellt, das eine Änderung in der Kanteninformation zwischen den Intervallen und eine Bewegung im überwachten Bereich darstellt, dadurch gekennzeichnet, daß die auf das Fernsehsignal ansprechende Einrichtung aufweist:
ein Tiefpaßfilter (15), dessen Eingang das Fernsehsignal erzeugt und der an einem Ausgang ein der Verarbeitung durch das Tiefpaßfilter unterzogenes Fernsehsignal bereitstellt, das eine gegebene Tastfrequenz anzeigt,
ein erstes Differenzierglied (17), das an den Ausgang des Tiefpaßfilters angeschlossen ist und ein differenziertes Signal bereitstellt, das eine die Kanteninformation anzeigende Reihe bipolarer Impulse darstellt,
eine an das erste Differenzierglied angeschlossene Gleichrichtereinrichtung (19), die einen Impulszug einer gegebenen Polarität erzeugt, die die Kanteninformation im differenzierten Signal anzeigt,
ein zweites Differenzierglied (21), das an die Gleichrichtereinrichtung angeschlossen ist und ein zweites differenziertes Signal mit spezifiziertem Nulldurchgang bereitstellt, das die Kanteninformation im gleichgerichteten Signal anzeigt,
einen Nulldurchgangsdetektor (23), der auf das zweite differenzierte Signal anspricht und einen ersten Binärwert für einen Nulldurchgang und einen zweiten Binärwert für einen ausbleibenden Nulldurchgang bereitstellt,
einen an den Detektor angeschlossenen Speicher (26), der die ersten Binärwerte an gegebenen Plätzen speichert, die die Kanteninformation im Fernsehsignal während des ersten Zeitintervalls anzeigen.

2. Bewegungsdetektor nach Anspruch 1, wobei das erste Zeitintervall ein Fernsehfeld und das nachfolgende Zeitintervall ein nachfolgendes vergleichbares Feld ist.

3. Bewegungsdetektor nach Anspruch 1, wobei der Speicher (26) mehrere Speicherplätze aufweist, die je Kanteninformation speichern können, die eine zugehörige Fernsehzeile anzeigt und einen getasteten Bereich innerhalb der Zeile, so daß an jedem zugehörigen Platz Kanteninformation jeder Zeile gespeichert wird, wie sie während des ersten Zeitintervalls getastet wurde.

4. Bewegungsdetektor nach Anspruch 3, wobei der Speicher (26) ein RAM-Speicher mit mehreren Speicherplätzen zum Speichern von 256 Tastungen für jede von 256 Fernsehzeilen ist.

5. Bewegungsdetektor nach Anspruch 1, ferner mit:
einer an den Speicher (26) angeschlossenen Speichersteuereinrichtung (27) zum Bereitstellen von Adresseninformation für den Speicher (26), die eine gewählte Anzahl horizontaler Zeilen in einem Fernsehbild anzeigt, so daß der Speicher in den zugehörigen Speicherplätzen alle der adressierten Zeile zugehörigen Kanteninformationen speichern kann, so daß der Speicher (26) für jede gewählte Anzahl von Zeilen innerhalb mehrerer jeder Zeile zugeordneter Plätze Kanteninformation gespeichert hat.

6. Bewegungsdetektor nach einem der vorstehenden Ansprüche, ferner mit:
einer Synchronisierimpuls-Trenneinrichtung (14), die auf das Fernsehsignal anspricht und an einem Ausgang ein Horizontal-Synchronisiersignal, an einem zweiten Ausgang ein Vertikal-Synchronisiersignal und an einem dritten Ausgang ein Taktsignal abgibt, dessen Wiederholungsfrequenz die Tastfrequenz für jede Fernsehzeile anzeigt.

7. Bewegungsdetektor nach Anspruch 6, wobei die Speichersteuereinrichtung (27) an die Ausgänge der Synchronisierimpuls-Trenneinrichtung (14) angeschlossene Eingänge und an die Speichereinrichtung (26) angeschlossene Ausgänge aufweist und auf den Horizontalsynchronisierimpuls, den Vertikalsynchronisierimpuls und das Taktsignal anspricht und an einem ersten Ausgang eine Reihe von Adressen bereitstellt, die je eine Fernsehzeile und ein Tastintervall auf der Zeile anzeigen, zum Adressieren des Speichers und zum Speichern der Information in gewählten Speicherplätzen, und ferner eine Einrichtung zum Steuern der Speichereinrichtung zum Lesen oder Schreiben der gespeicherten Information.

8. Bewegungsdetektor nach Anspruch 7, ferner mit einer Fangeinrichtung (25), die einen an den Ausgang des Nulldurchgangsdetektors angeschlossenen Eingang und einen an den Taktausgang der Synchronisierimpuls-Trenneinrichtung (14) angeschlossenen Eingang aufweist und an einem Ausgang die Reihe von Impulsen abgibt, die mit dem Taktimpuls synchronisierte Nulldurchgangsinformation anzeigt.

9. Bewegungsdetektor nach Anspruch 8, wobei die Komparatoreinrichtung ein Bit-Komparatorgatter (28) aufweist, dessen einer Eingang auf einen gespeicherten Wert und dessen weiterer Eingang auf den erzeugten Wert anspricht und an dessen Ausgang ein Signal bereitgestellt wird, das einen Kantenvergleich für keine Bewegung darstellt, oder ein Signal, das einen Nicht-Kantenvergleich für eine Bewegung anzeigt.

10. Bewegungsdetektor nach Anspruch 9, ferner mit einer Minimal-Impulsbreiten-Detektoreinrichtung (30) in der Komparatoreinrichtung, die nur für Ausgangssignale vorbestimmter Breite von der Komparatoreinrichtung die Alarmsignale bereitstellt.

11. Verfahren zum Erfassen von Bewegung durch Ansprechen auf ein von einer Fernsehkamera erzeugtes Fernsehsignal, die auf einen Gegenstände enthaltenden Überwachungsbereich gerichtet ist, mit den Schritten:
Speichern mehrerer Tastungen für jede einer gegebenen Anzahl von Fernsehzeilen in einem Speicher, wobei jede gespeicherte Tastung eine Gegenstands-Kanteninformation für jede Fernsehzeile während eines ersten Fernseh-Zeitsteuerintervalls anzeigt,
Erzeugen mehrerer zweiter Tastungen für jede gegebene Anzahl von Fernsehzeilen während eines zweiten, nachfolgenden Fernseh-Zeitsteuerintervalls, wobei jede erzeugte Tastung die gleiche Kanteninformation wie die gespeicherte anzeigt,
Vergleichen der gespeicherten Tastungen mit den erzeugten Tastungen, um zu bestimmen, ob zwischen den Intervallen eine Bewegung einer Kante erfolgt ist,
Bereitstellen eines Ausgangssignals nach Feststellung einer Bewegung einer Kante, das eine Bewegung in dem Bereich anzeigt, dadurch gekennzeichnet, daß der Schritt des Erzeugens der mehreren zweiten Tastungen umfaßt:
Differenzieren des Fernsehsignals und Bereitstellen eines differenzierten Ausgangssignals,
Gleichrichten des differenzierten Signals und Bereitstellen eines Impulssignals gegebener Polarität mit jedem Impuls, der Kanteninformation längs einer Fernsehzeile anzeigt,
Differenzieren des Impulssignals und Bereitstellen eines differenzierten Signals mit ausgeprägten Nulldurchgängen,
Erfassen der Nulldurchgänge und Bereitstellen eines Signals mit einem ersten Binärwert für einen Nulldurchgang und einem zweiten Wert für das Ausbleiben eines Nulldurchganges.

12. Verfahren nach Anspruch 11, wobei das erste Fernseh-Zeitsteuerintervall ein Fernsehfeld und das zweite, nachfolgende Zeitsteuerintervall einer eines folgenden vergleichbaren Feldes ist.

13. Verfahren nach Anspruch 12, wobei jede Fernsehzeile eine gegebene Anzahl von Malen getastet wird, so daß mehrere getastete Bereiche für jede Zeile erzeugt werden und jeder Bereich eine zu speichernde Kanteninformation bereitstellen kann.

14. Verfahren nach Anspruch 11, mit dem weiteren Schritt:
Identifizieren jeder gespeicherten Tastung, wie sie im Speicher gemäß einer gegebenen Fernsehzeilenanzeige und gemäß einem gegebenen Bereich auf der Zeile im Speicher gespeichert ist, so daß jede gespeicherte Tastung entsprechend identifiziert werden kann.

15. Verfahren nach Anspruch 14, ferner mit dem Schritt des Identifizierens gegebener gespeicherter Tastungen, die eine Bewegung einer Kante anzeigen, wenn das Ausgangssignal bereitgestellt wird, so daß der Bewegungsbereich im Fernsehbild lokalisiert werden kann.

## Revendications

1. Appareil détecteur de mouvement du type sensible à un signal de télévision correspondant à une image de télévision, ledit signal étant généré par une caméra de télévision contrôlant une zone contenant des objets sous surveillance, comprenant:
des moyens sensibles audit signal de télévision pour mémoriser les informations relatives aux bords correspondant à des emplacements d'objets donnés pendant un premier intervalle de temps,
et opérationnels pour générer des informations relatives aux bords pour un intervalle de temps suivant et comprenant des moyens formant comparateurs (28, 29, 30) pour comparer lesdites informations relatives aux bords mémorisées auxdites informations relatives aux bords générées auxdits emplacements d'objets donnés pour fournir un signal de sortie représentatif d'un changement dans lesdites informations relatives aux bords entre lesdits intervalles et correspondant à un mouvement dans ladite zone sous surveillance, caractérisé en ce que lesdits moyens sensibles audit signal de télévision comprennent,
un moyen formant filtre passe-bas (15) comportant une entrée pour recevoir ledit signal de télévision afin de fournir à une sortie un signal de télévision filtré correspondant à une fréquence d'échantillonnage donnée,
un premier différenciateur (17) couplé à ladite sortie du filtre passe-bas pour fournir un signal différencié constituant une série d'impulsions bipolaires correspondant à des informations relatives aux bords,
un moyen formant redresseur (19) couplé audit premier différenciateur pour fournir un train d'impulsions d'une polarité donnée correspondant aux dites informations relatives aux bords dans ledit signal différencié,
un deuxième différenciateur (21) couplé audit moyen formant redresseur pour fournir un deuxième signal différencié avec un passage au point zéro spécifié correspondant aux informations relatives aux bords dans ledit signal redressé,
un détecteur de passage à zéro (23) sensible audit deuxième signal différencié pour fournir une première valeur binaire pour un passage au point zéro et une deuxième valeur binaire pour l'absence de passage au point zéro,
une mémoire (26) couplée audit détecteur et opérationnelle pour mémoriser lesdites premières valeurs binaires dans des emplacements donnés correspondant aux informations relatives aux bords dans ledit signal de télévision pendant ledit premier intervalle de temps.

2. Appareil détecteur de mouvement selon la revendication 1, caractérisé en ce que ledit premier intervalle de temps est une trame de télévision et ledit intervalle de temps suivant est une trame suivante comparable.

3. Appareil détecteur de mouvement selon la revendication 1, caractérisé en ce que ladite mémoire (26) comporte une pluralité d'emplacements de mémorisation, chaque emplacement étant opérationnel pour mémoriser des informations relatives aux bords correspondant à une ligne de télévision associée et une zone échantillonnée dans ladite ligne pour mémoriser ainsi dans chaque emplacement associé des informations relatives aux bords de chaque ligne telle qu'elles sont échantillonnées pendant ledit premier intervalle de temps.

4. Appareil détecteur de mouvement selon la revendication 3, caractérisé en ce que ladite mémoire (26) est une mémoire RAM comportant ladite pluralité d'emplacements de mémorisation pour mémoriser 256 échantillons pour chacune des 256 lignes de télévision.

5. Détecteur de mouvement selon la revendication 1, comprenant en outre :
un moyen formant commande de mémoire (27) couplé à ladite mémoire (26) pour fournir des informations relatives aux adresses pour ladite mémoire (26) correspondant à un nombre sélectionné de lignes horizontales dans une image de télévision pour permettre à ladite mémoire de mémoriser dans les emplacements de mémoire associés toutes les informations relatives aux bords associées à ladite ligne adressée, ladite mémoire (26) mémorisant ainsi des informations relatives aux bords pour chaque nombre sélectionné de lignes dans une pluralité d'emplacements associés à chaque ligne.

6. Appareil détecteur de mouvement selon l'une quelconque des revendications précédentes, comprenant également :
un moyen formant séparateur de synchronisation (14) sensible audit signal de télévision pour fournir à une sortie un signal de synchronisation horizontal, à une deuxième sortie un signal de synchronisation vertical et à une troisième sortie un signal d'horloge présentant une fréquence de répétition correspondant à une fréquence d'échantillonnage pour chaque ligne de télévision.

7. Appareil détecteur de mouvement selon la revendication 6, caractérisé en ce que ledit
moyen de commande de mémoire (27) comporte des entrées couplées aux sorties dudit moyen formant séparateur de synchronisation (14) et des sorties couplées audit moyen formant mémoire (26) et sensibles audit signal de synchronisation horizontal, audit signal de synchronisation vertical et audit signal d'horloge pour fournir à une première sortie une série d'adresses indiquant chacune une ligne de télévision et un intervalle d'échantillonnage sur ladite ligne pour adresser ladite mémoire pour permettre la mémorisation desdites informations dans les emplacements de mémoire sélectionnés et comprenant, en outre, des moyens pour commander ledit moyen formant mémoire pour lire ou écrire lesdites informations mémorisées.

8. Détecteur de mouvement selon la revendication 7, comprenant, en outre, un moyen formant bascule (25) présentant une entrée couplée à la sortie dudit moyen formant détecteur de passage au point zéro et une entrée couplée à ladite sortie d'horloge dudit moyen formant séparateur de synchronisation (14) et opérationnel pour fournir à une sortie ladite série d'impulsions correspondant aux informations relatives au passage au point zéro synchronisées sur ladite horloge.

9. Appareil formant détecteur de mouvement selon la revendication 8, dans lequel ledit moyen formant comparateur comprend un circuit de comparateur de bits (28) présentant une entrée sensible à une valeur mémorisée et une autre entrée sensible à ladite valeur générée pour fournir à une sortie un signal correspondant à une comparaison de bords pour l'absence de mouvement ou un signal correspondant à une non comparaison de bords pour le mouvement.

10. Appareil formant détecteur de mouvement selon la revendication 9, comprenant, en outre, un moyen formant détecteur de largeur d'impulsion minimale (30) compris dans ledit moyen formant comparateur et opérationnel pour fournir lesdits signaux d'alarme uniquement pour les signaux de sortie de largeur prédéterminée à partir dudit moyen formant comparateur.

11. Procédé pour détecter le mouvement par sensibilité à un signal de télévision généré par une caméra de télévision contrôlant une zone contenant des objets sous surveillance, comprenant les étapes suivantes:
mémorisation en mémoire d'une pluralité d'échantillons pour chaque ligne d'un nombre donné de lignes de télévision, chaque échantillon mémorisé correspondant aux informations relatives aux bords d'objets pour chaque ligne de télévision pendant un premier intervalle de temps de télévision,
génération d'une deuxième pluralité d'échantillons pour chaque nombre donné de lignes de télévision pendant un deuxième intervalle de temps de télévision suivant, chaque échantillon généré correspondant aux mêmes informations relatives aux bords telles qu'elles sont mémorisées,
comparaison desdits échantillons mémorisés auxdits échantillons générés pour déterminer si un mouvement d'un bord s'est produit entre lesdits intervalles;
fourniture d'un signal de sortie lors de la détermination d'un mouvement d'un bord et correspondant à un mouvement dans ladite zone, caractérisé en ce que l'étape de génération de ladite deuxième pluralité d'échantillons comprend également la différenciation dudit signal de télévision pour fournir un signal de sortie différencié,
redresser ledit signal différencié pour fournir un signal d'impulsion d'une polarité donnée, chaque impulsion correspondant aux informations relatives aux bords le long d'une ligne de télévision,
différentier ledit signal d'impulsion pour fournir un signal différencié présentant des passages au point zéro distincts,
détecter ledit passage à zéro pour fournir un signal présentant une première valeur binaire pour un passage au point zéro et une deuxième valeur pour l'absence de passage au point zéro.

12. Procédé selon la revendication 11, caractérisé en ce que ledit premier intervalle de temps de télévision est une trame de télévision , ledit deuxième intervalle de temps de télévision suivant étant une des trames suivantes comparables.

13. Procédé selon la revendication 12, caractérisé en ce que chaque ligne de télévision est échantillonnée un nombre de fois donné pour fournir une pluralité de zones échantillonnées pour chaque ligne, chaque zone pouvant fournir des informations relatives aux bords à mémoriser.

14. Procédé selon la revendication 11, comprenant, en outre, l'étape d'identification de chaque échantillon mémorisé tel qu'il est mémorisé en mémoire selon une indication de ligne de télévision donnée et selon une zone donnée sur ladite ligne, chaque échantillon mémorisé pouvant ainsi être identifié.

15. Procédé selon la revendication 14, comprenant, en outre, l'étape d'identification d'échantillons donnés mémorisés qui indiquent un mouvement d'un bord lorsque ledit signal de sortie est fourni pour permettre de localiser la zone de mouvement dans ladite image de télévision.
